Europäisches Patentamt

European Patent Office

Office européen des brevets

(11) Veröffentlichungsnummer: **0 668 314 A1**

# (12) EUROPÄISCHE PATENTANMELDUNG

(21) Anmeldenummer: **95101556.9**

(22) Anmeldetag: **06.02.95**

(51) Int. Cl.6: **C08K 7/00**, C08L 23/12, B32B 27/32

(30) Priorität: **17.02.94 DE 4405062**

(43) Veröffentlichungstag der Anmeldung: **23.08.95 Patentblatt 95/34**

(84) Benannte Vertragsstaaten: **AT BE CH DE DK ES FR GB IT LI NL SE**

(71) Anmelder: **WOLFF WALSRODE AG**

**D-29655 Walsrode (DE)**

(72) Erfinder: **Hendrickson-Benkhoff, Hermann, Dipl.-Ing.**
**Schillerstrasse 9a**
**D-27356 Rotenburg (DE)**
Erfinder: **Stockmeier, Dietrich, Dr.**
**Kirchboitzen 146**
**D-29664 Walsrode (DE)**
Erfinder: **Reiners, Ulrich, Dr.**
**Blumenstrasse 15**
**D-29643 Neuenkirchen (DE)**

(74) Vertreter: **Braun, Rolf, Dr.**
**Bayer AG,**
**Konzernzentrale RP,**
**Patente Konzern**
**D-51368 Leverkusen (DE)**

(54) **Transparente gereckte Polyolefinfolie.**

(57) Wenigstens monoaxial gereckte Polypropylenfolie, enthaltend jeweils ein Antiblockmittel, wobei das Antiblockmittel eine quader- und/oder würfelförmige, vorzugsweise eine würfelförmige Geometrie mit angefasten, d.h. angeschrägten Kanten hat und röntgenamorph ist.

EP 0 668 314 A1

Die vorliegende Erfindung betrifft eine mindestens monoaxial orientierte, transparente Polyolefinfolie, die sich durch verbesserte Optik bei gleichzeitig guter Maschinengängigkeit und verringerter Kratzempfindlichkeit auszeichnet.

Transparente orientierte Polyolefinfolien werden in großen Mengen als Verpackungsmaterialien verwendet. Sie werden aber auch aufgrund ihrer guten optischen Eigenschaften in der grafischen Industrie für die Folienkaschierung von Druckerzeugnissen eingesetzt. Verarbeitungsprobleme können sich auf schnellaufenden vertikal und horizontal arbeitenden Verpackungs- und/oder Verarbeitungsmaschinen ergeben. Es ist allgemein bekannt, daß zur Verbesserung der entsprechenden Eigenschaften die Polyolefin-Ein- und Mehrschichtfolien mit Antistatika, Gleitmittel und insbesondere Antiblockmittel ausgerüstet werden.

Aus EP-A-27 586 und EP-A-189 242 geht hervor, daß als Antiblockmittel im weitesten Umfang fein verteiltes Siliciumdioxid ($SiO_2$) eingesetzt wird. Dieses $SiO_2$-Antiblockmittel (zum Beispiel auch unter der Handelsbezeichnung SYLOBLOC 44 und 45 der Firma Grace GmbH, Worms bekannt) mit einer mittleren Partikelgrößen von 1,0 bis 5,0 $\mu$m, vorzugsweise 2,5 bis 4,0 $\mu$m verbessern das Folienreibverhalten, aber verschlechtert die optischen Folieneigenschaften, wie zum Beispiel die Trübung wesentlich.

In US 4 529 764 wird über den Einsatz von Talkum, Kalkstein, Magnesium Silikat, Tonerde, Zinkoxiden und auch über Kieselsäure ($SiO_2$) als Antiblockmittel in Polyolefinfolien zur Verbesserung der Folienreibkoeffizienten geschrieben. Auch hier wird die optische Folienqualität, wie zum Beispiel der Oberflächenglanz aufgrund der Zugabe von Antiblockmitteln wesentlich beeinträchtigt.

In DE-A 34 44 157 wird ein blattförmiges anorganisches Silikat, welches sich bei der biaxialen Orientierung der Folie überwiegend parallel zur Folienebene ausrichtet, als Antiblockmittel eingesetzt. Die Kratzempfindlichkeit der Folienoberfläche, in die das blättchenförmige anorganische Silikat mit einem mittleren Teilchendurchmesser von 0,1 bis 1,0 $\mu$m eingesetzt wird, erhöht sich nicht und gleichzeitig verbessert sich das Gleitverhalten der Folie. Aber durch den Einsatz dieses Silikats als Antiblockmittel mit blattförmiger Struktur verschlechtert sich zum einen die Trübung der Folie und zum anderen wird die Siegelanspringtemperatur der Siegelschichtseite wesentlich beeinträchtigt.

In EP-A 0 447 652 und EP-A 0 353 368 wird die kugelförmige Ausführung eines vernetzten Polymerpulvers als Antiblockmittel besonders beschrieben. Das kugelförmige Antiblockmittel (in EP 0 353 368 unter dem Handelsnamen Tospearl 120, 130 und 145 der Firma Toshiba Silicone bekannt) in mindestens monoaxial gereckten Ein- und/oder Mehrschicht-Polyolefinfolien verbessern die Folienreibkoeffizienten im Vergleich zu Standardantiblockmitteln wie zum Beispiel Siliciumdioxid ($SiO_2$) wesentlich. Es tritt aber bei kugelförmigem Antiblockmitteln stets eine deutliche Verschlechterung der optischen Folieneigenschaften wie z. B. der Trübung auf.

Durch die Verwendung all dieser beschriebenen Antiblockmittel verbessern sich die Folienreibkoeffizienten und somit die Maschinengängigkeit einer Polyolefinfolie wesentlich, jedoch weisen die mit den genannten Antiblockmitteln ausgerüsteten Folien immer noch Nachteile hinsichtlich der optischen Eigenschaften, wie Trübung und Glanz auf.

Es stellt sich daher die Aufgabe, eine Folie mit wesentlich verbesserten optischen Eigenschaften, d. h. geringer Grauschleier, hoher Oberflächenglanz und geringer Trübung unter Beibehaltung guter Maschinengängigkeit und damit geringen Folienreibkoeffizienten bereitzustellen, die sich besonders als Einzel- und/oder Verbundfolie für die Verarbeitung auf schnellaufenden vertikal und horizontal arbeitenden Verpackungs- und/oder Verarbeitungsmaschinen verschiedenen Typs eignen. Außerdem soll sich die Folie nach konventionellen Verfahren, bei denen mono und/oder biaxial mit Walzen und gegebenenfalls Kluppenrahmen gestreckt wird, problemlos herstellen lassen.

Gelöst wird diese Aufgabe durch eine wenigstens monoaxial gereckte Polypropylen-Mehrschichtfolie, enthaltend jeweils wenigstens ein Gleitmittel, ein Antistatikum und ein Antiblockmittel, das dadurch gekennzeichnet ist, daß es eine quader- und/oder würfelförmige Geometrie mit abgefasten, d. h. angeschrägten Kanten besitzt und röntgenamorph ist.

In der bevorzugten Ausführungsform handelt es sich bei der Folie um eine dreischichtige transparente Folie. Bei transparenten Folien kommen die Vorteile des erfindungsgemäß zu verwendenden Antiblockmittels hinsichtlich der Trübung, des Oberflächenglanzes, des Folienreibkoeffizienten, des Grauschleiers und der Kratzempfindlichkeit zum Tragen. Bei dem erfindungsgemäßen Antiblockmittel handelt es sich um ein Na-Al-Silikat (18 bis 25% Al, 18 bis 25% Si, 6 bis 12% Na und dem Rest $O_2$) mit einer vorzugsweisen quader- und/oder würfelförmigen Geometrie. Der Abstand der jeweils parallel zueinander angeordneten Flächen des angefasten quader- und/oder würfelförmigen Antiblockmittels wird als Kantenlänge bezeichnet und ist wie folgt definiert:

Höhe:    h
Breite:    b
Tiefe:    t,

wobei die Kombinationen b = t mit b und t = h, h = b mit h und b = t, h = t mit h und t = b und b = h = t möglich sind. Ist die Geometrie des Antiblockmittels so, daß die Kanten (Abstand der parallel zueinander angeordneten Flächen) des Antiblockmittels gleich lang sind, d. h. b = h = t, dann liegt eine würfelförmige Geometrie vor. In den anderen Fällen liegt eine quaderförmige Geometrie vor.

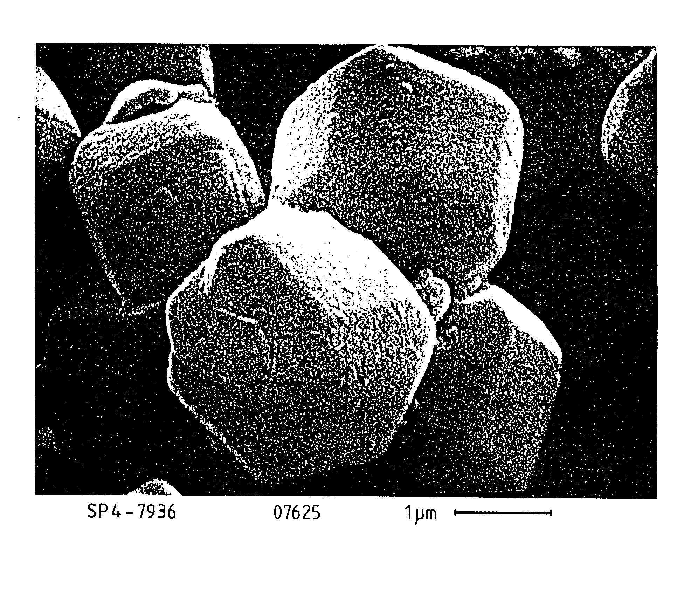

Vorzugsweise liegt das erfindungsmäßige Antiblockmittel in einer würfelförmigen Geometrie vor, dessen Kanten eine Fase besitzen, d. h. angeschrägt sind. Im Bild 1 wird das erfindungsgemäße Antiblockmittel beispielweise dargestellt. Die mittleren Kantenlängen (Abstand der parallel zueinander angeordneten Flächen) b = h = t des erfindungsgemäßen Antiblockmittels sind von 1,0 bis 4,0 $\mu$m, bevorzugt 1,5 bis 3,0 $\mu$m.

Das erfindungsgemäß zu verwendene Antiblockmittel ist vorzugsweise in einer Menge von 500 bis 5000 ppm, insbesondere 1000 bis 3500 ppm bezogen auf die jeweilige Schicht, in die das erfindungsgemäße Antiblockmittel eingearbeitet wird, in einer Ein- oder Mehrschichtfolie enthalten. Im Fall einer Mehrschichtfolie enthält mindestens immer eine Außenschicht das erfindungsgemäße Antiblockmittel. Die durchschnittliche Teilchengröße beträgt 2 bis 5 $\mu$m, vorzugsweise 3,5 bis 4,5 $\mu$m.

Übertaschenderweise ist es durch die Verwendung des erfindungsgemäßen würfel- und/oder quaderförmigen Antiblockmittels mit angeschrägten Kanten in Ein- und Mehrschichtfolien gelungen, das Gleitverhalten (DIN-Reibung) und somit die Maschinengängigkeit unter Beibehaltung der optischen Eigenschaften, d. h. geringer Grauschleier geringe Trübung und gleichbleibendem Glanz wesentlich zu verbessern. Desweitern war nicht zu erwarten, daß durch die Verwendung des erfindungsgemäßen Antiblockmittels die Kratzempfindlichkeit wesentlich verringer werden konnte.

In der bevorzugten Ausführungsform handelt es sich bei der Folie um eine dreischichtige transparente Folie. Die Basisschicht, d. h. die von den beiden Außenschichten eingeschlossene innenliegende Kernschicht, der Mehrschichtfolie ist aus Polypropylenpolymer, welches für diesen Anwendungszweck der Folienherstellung ein übliches Polymeres ist. Übliche Polymere sind z. B. Homopolymere, insbesondere isotartisches Polypropylen mit einem n-Heptan löslichen Anteil von maximal 15 Gew.-% oder ein Copolymer des Propylens mit Ethylen oder $C_4$- bis $C_8$-Olefinen mit mindestens 90 Gew.-% Propylenanteil. Die üblichen Propylenpolymere der Basisschicht haben zweckmäßigerweise einen Sclimelzflußindex (MFI) von 0,5 bis 8, inbesondere 1,5 bis 4 g/10 min bei 230°C und 2,16 kp Belastung (DIN 53 735) und einen Schmelzpunkt von mindestes 140°C, vorzugsweise 150°C oder höher. Die Propylenpolymere besitzen üblicherweise eine Dichte von 0,9 bis 0,91 g/cm$^{3`}$

Die Außenschichten werden üblicherweise als Siegel- und/oder Kaschierschichten einer Mehrschicht-Polyolefinfolie eingesetz. Um die geforderten Eigenschaften der Außenschichten als Siegel- bzw. Kaschierschicht zu gewährleisten, werden für die Außenschichten zahlreiche polyolefinische Materialien, vorzugsweise folgende eingesetzt:

- isotaktisches Polypropylen mit einem n-Heptan löslichen Anteil von maximal 15 Gew.-% gemäß des als Basisschichtmaterial beschriebenen Polypropylens
- $C_4$- bis $C_8$-Olefinen mit mindestens 90 Gew.-% Propylenanteil
- statistische Propylen/Ethylen-Copolymere
- statistische Propylen/Buten-1-Copolymere
- statistische Propylen/Ethylen/Olefln-Terpolymere

sowie

- Mischungen aus mindestens zwei und/oder mehreren der vorstehenden Polymere.

Die Außenschichten sind für die Anwendung als Kaschierfolie vorzugsweise aus dem Material der Basisschicht und für die Anwendung als siegelfähige Folie aus einem statistischen Propylen/Ethylen-Copolymeres, welches 90,0 bis 99,0 Gew.-% Polypropylen und 1,0 bis 10,0 Gew.-% eines Polyethylens enthält. Dieses Siegelschichtmaterial ist dadurch gekennzeichnet, daß es einen Schmelzpunkt von 110 bis 150°C, insbesondere 120 bis 140°C, und einen Schmelzflußindex (MFI) von 2 bis 8, insbesondere 4 bis 6 g/10 min bei 230°C und 2,16 kp Belastung (DIN 53735) hat.

Die Ausrüstung der Schichten der Ein- und/oder Mehrschichtfolie mit weiteren allgemein üblichen Additiven und Hilfsmitteln in bewährten Mengen, wie z. B. Gleitmittel, Antistatika, Antiblockmitteln, ist möglich. Die üblichen Additive sowie das erfindungsmäßige quader- und/oder würfelförmige Antiblockmittel werden bei der Folienherstellung in Form von Masterbatches zugegeben. Unter dem Begriff Masterbatch ist eine Mischung aus dem Kunststoffrohstoff und einer hohen Menge an Additiv zu verstehen. Die Masterbatche können nur ein einzelnes Additiv oder auch mehrere Additive enthalten. Bevorzugt werden Masterbatche mit mehreren Additiven auf Basis des jeweiligen Kunststoffrohstoffes, in die das Masterbatch eingearbeitet werden sollen. Das erfindungsmäßige Antiblockmittel wird für die Anwendung in einer Kaschierfolie auf Basis eines Polypropylenpolymers gemäß des Außenschichtmaterials gebatcht und in die Außenschichten eingearbeitet. Für die Anwendung in einer siegelfähigen Mehrschichtfolie wird das erfindungsgemäße Antiblockmittel auf Basis eines P/E-Copolymers, siehe obenstehende Liste, compoundiert und in mindestens eine, vorzugsweise in beide Außenschichten eingearbeitet.

Die Wirkung allgemein bekannter Antistatika ist auf den hydrophilen Molekülteil, der mit dem langkettigen hydrophoben Kohlenwasserstoffrest verbunden ist, zurückzuführen. In den Folien richten sich die Molekülketten so aus, daß der hydrophile Teil an der Oberfläche der Folie Wasser anlagert kann, woraus eine Erniedrigung des Oberflächenwiderstandes resultiert, die letztlich die antistatische Wirkung ausmacht.

Bevorzugte Antistatika sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit zwei Hydroxyalkyl-($C_1$-$C_4$)-Gruppen substituiert sind, worunter N,N-Bis-(2-hydroxyethyl)-alkylamine mit $C_{10}$-$C_{20}$, vorzugsweise $C_{12}$-$C_{18}$ als Alkylgruppe besonders geeignet sind. Die wirksame Menge an Antistatika liegt im Bereich von 0,05 bis 3,0 Gew.-%, bezogen auf die jeweilige Schicht.

Als Gleitmittel werden üblicherweise höhere aliphatische Säureamide, höhere aliphatische Säureester, Wachse und Metallfette eingesetzt. Typische Beispiele sind Erucasäureamid und Ölsäureamid, dessen üblich wirksame Menge zwischen 0,1 und 0,2 Gew.-%, bezogen auf die jeweilige Schicht, liegen. Weiterhin werden Polymere aus der Gruppe der Polyalkylsiloxane eingesetzt.

Wie aus US 4 529 764 hervorgeht, werden weitere geeignete anorganische Zusätze für Polyolefinfolien als Antiblockmittel, wie z. B. Siliciumdioxid, Talkum, Kalkstein, Calciumcarbonat, Tonerde, Kieselsäure, Zinkoxide, Magnesium Silikat, Aluminiumsilikat, Calciumphosphat und andere mehr, sowie mit dem Außenschichtmaterial unverträgliche, d. h. nicht mischbare Polymerisate, wie Polyamide, Polyester, Polycarbonate, Polymethylmethacrylat und dergleichen eingesetzt.

Üblicherweise werden Polyolefine durch Stabilisatoren gegen den thermischen Abbau während der Herstellung und der Verarbeitung zu z.B. Folien stabilisiert. Im EP-A-27 586 und der EP-A-263 882 werden bevorzugt stabilisierend wirkende Verbindungen und ihre Kombinationen für Ethylen-, Propylen- und anderen a-Olefinpolymeren beispielsweise beschrieben. Die für eine ausreichende Stabilisierung notwenige Menge beträgt im allgemeinen 0,1 bis 2,0 Gew.-% bezogen auf die jeweilige Schicht.

Die erfindungsgemäßen Folien können nach bekannten Verfahren wie Laminierung, Beschichtung oder Schmelzecoextrusion hergestellt werden. Nach der Extrusion und der Verfestigung des Dickfilms auf der Gießwalze und/oder im Wasserbad und/oder einer Kombination aus beiden wird der Film mindesten monoaxial, bevorzugt biaxial, gereckt. Dabei wird der Film in Laufrichtung (längs) in einem Verhältnis von 4:1 bis 7:1, vorzugsweise 5:1 bis 6:1 bei einer Temperatur von 120°C bis 150°C gereckt. Das Reckverhältnis quer zur Laufrichtung des Films (Querreckverhältnis) liegt in einem Bereich von 8:1 bis 12:1, bevorzugt 9:1 bis 11:1 und das Querrecken des Films wird bei einer Temperatur zwischen 130°C und 170°C vorgenommen. Dem biaxialorientierenden Prozeß (Längs- und Querstreckung) schließt sich eine thermische Fixierung des Films an. Die Thermofixierung wird üblicherweise bei 1°C bis 40°C unter der Querrecktemperatur durchgeführt.

Nach Fertigstellung des erfindungsmäßigen Films liegt eine Foliengesamtdicke von 8 bis 50 μm vor. Die Außenschichtdicken einer Mehrschichtfolie, dreischichtige Folie bevorzugt, sind zwischen 1,0 bis 18,75 %, vorzugsweise zwischen 2,0 und 12,5 % der Foliengesamtdicke.

Die erfindungsgemäßen Polyolefin-Ein- und/oder Mehrschichtfolien sind im allgemeinen weitgehend unpolar, was das Spreiten von z. B. Druckfarben, Klebern u. a. m. auf der Folienoberfläche erschwert oder sogar unmöglich macht. Um die Benetzbarkeit und somit die Affinität zwischen den Druckfarben und/oder Klebern und der unpolaren Folienoberfläche zu erhöhen, ist es notwendig, die Folienoberfläche einer Corona-(Sprüh)-Vorbehandlung zu unterziehen. Dabei wird der Luftsauerstoff in Form von Carbonyl-, Epoxid-, Ether- und/oder Alkoholgruppen auf der Folienoberfläche eingelagert. Weitere Methoden der Vorbehandlung von Polyolefinfolien sind die Flamm-, Plasma- und Fluorvorbehandlung. Die Behandlungsintensitäten liegen im üblichen Rahmen, vorzugsweise zwischen 36 und 42 mN/m.

Die erfindungsgemäßen Folien eignen sich wegen ihrer hervorragenden Gleiteigenschaften besonders für die Verarbeitung auf schnellaufenden Verpackungsmaschinen. Außerdem wird die Verarbeitung auf Trommel- und Tunnelkaschiermaschinen bei hohen Geschwindigkeiten ermöglicht.

Wegen ihrer vorzüglichen optischen Eigenschaften eignen sich die erfindungsgemäß hergestellten Folien für die Folienkaschierung, insbesondere Hochglanzkaschierungen, graphische Produkte, wie Bucheinbände, Prospekteinbände, Buchhüllen, Schallplattenhüllen, Verpackungen u. a. m..

**Beispiel 1**

Mittels des oben beschriebenen Coextrusionsverfahrens wird eine biaxial orientierte Polypropylendreischichtfolie (Außenschicht a, Kernschicht = Basisschicht und Außenschicht b) mit den bevorzugten Reckverhältnissen (längs 5:1 und quer 10:1), einer mittleren Längsrecktemperatur von 142°C und einer mittleren Querrecktemperatur von 160°C hergestellt. Die Außenseite a der dreischichtigen Folie ist coronavorbehandelt. Die coextrudierte Folie hat eine Gesamtdicke von 20 $\mu$m, dessen Aufbau nachfolgend beschrieben ist:

Außenschicht a:

Dicke: 1 $\mu$m
Material: 99,9 Gew.-% Propylen/Ethylen-Copolymeren mit einem bevorzugten Schmelzflußindex von 5 g/10 min (DIN 53 735 bei 21,6 H Belastung und 230°C) und einem Schmelzpunkt von 140°C
0,1 Gew.-% Siliciumdioxid ($SiO_2$) mit einem mittleren Teilchendurchmesser von 3 bis 4 $\mu$m.

Basisschicht:

Material: 100 Gew.-% eines Polypropylenpolymeren mit einer Dichte von 0,91 g/cm$^3$ und einem Schmelzflußindex von 3,3 g/10 min bei 230°C und einer Belastung von 2,16 N nach DIN 53 735 bestimmt verwendet.

Außenschicht b:

Dicke: 1 $\mu$m
Material: 60 Gew.-% einer Polymermischung, die sich aus
$a_1$) 50 Gew.-% eines Ethylen-Propylen-Butylen-Terpolymeren,bestehend aus 1,4 Gew.-% Ethylen, 2,8 Gew.-% Butylen und 95,8 Gew.-% Propylen (jeweils bezogen auf das Terpolymere), sowie
$a_2$) 50 Gew.-% eines Propylen-Butylen-Copolymeren, bestehend aus 66,8 Gew.-% Propylen und 33,2 Gew.-% Butylen (bezogen auf das Copolymere), zusammengesetzt ($a_1$ + $a_2$ = TAFMER XR 107 L), was einem Gehalt von 0,7 Gew.-% Ethylen, 81,3 Gew.-% Propylen und 18 Gew.-% Butylen, bezogen auf das TAFMER XR 107 L, entspricht. Die Polymermischung $a_1$ + $a_2$ hatte einen Schmelzflußindex von 8 g/10 min und einen Schmelzpunkt von 150°C.
39,6 Gew.-% Propylen/Ethylen-Copolymeren mit einem bevorzugten Schmelzflußindex von 5 g/10 min (DIN 53 735 bei 21,6 N Belastung und 230°C) und einem Schmelzpunkt von 140°C
0,2 Gew.-% Erucasäureamid
0,2 Gew.-% einer Na-Al-Silikat-Antiblockmittels der Fa. Grace mit der Bezeichnung SP4-7936 mit einer vorzugsweisen würfelförmigen Geometrie mit angeschrägten Kanten einer mittleren Kantenlängen (Abstand der parallel zueinander angeordneten Flächen) a ( = b = h = t) von 1,0 bis 4,0 $\mu$m, bevorzugt 1,5 bis 3,0 $\mu$m.

**Beispiel 2**

Es wurde eine Folie mit einer Gesamtdicke von 20 $\mu$m nach dem im Beispiel 1 beschriebenem Verfahren gefertigt, jedoch änderte sich die Rohstoffzusammensetzung wie folgt:

Außenschicht a und b:

Dicke: 1 $\mu$m
Material: 99,8 Gew.-% eines Polypropylenpolymeren mit einer Dichte von 0,91 g/cm$^3$ und einem Schmelzflußindex von 9 g/10 min bei 230°C und einer Belastung von 2,16 N nach DIN 53 735 bestimmt
0,2 Gew.-% würfelförmigen Antiblockmittels gemäß Beispiel 1

5

Basisschicht:

Material: 99,625 Gew.-% eines Polypropylenpolymeren mit einer Dichte von 0,91 g/cm$^3$ und einem Schmelzflußindex von 3,3 g/10 min bei 230°C und einer Belastung von 2,16 N nach DIN 53 735 bestimmt 0,274 Gew.-% ethoxyliertes Amin als Antistatikum 0,065 Gew.-% Erucasäureamid 0,036 Gew.-% ethoxyliertes Fettsäureamid

**Beispiel 3**

Gesamtdicke: 20 $\mu$m, einschichtig

Basisschicht:

Material: 99,415 Gew.-% eines Polypropylenpolymeren mit einer Dichte von 0,91 g/cm$^3$ und einem Schmelzflußindex von 3,3 g/10 min bei 230°C und einer Belastung von 2,16 N nach DIN 53 735 bestimmt 0,274 Gew.-% ethoxyliertes Amin als Antistatikum 0,065 Gew.-% Erucasäureamid 0,036 Gew.-% ethoxyliertes Fettsäureamid 0,21 Gew.-% würfelförmigen Antiblockmittels gemäß Beispiel 1

**Beispiel 4**

Es wurde eine Folie mit einer Gesamtdicke von 20 $\mu$m nach dem im Beispiel 2 beschriebenem Verfahren gefertigt, jedoch änderte sich die Rohstoffzusammensetzung wie folgt:

Außenschicht a und b:

Dicke: 1 $\mu$m

Material: 99,75 Gew.-% eines Polypropylenpolymeren mit einer Dichte von 0,91 g/cm$^3$ und einem Schmelzflußindex von 9 g/10 min bei 230°C und einer Belastung von 2,16 N nach DIN 53 735 bestimmt 0,25 Gew.-% würfelförmigen Antiblockmittels gemäß Beispiel 1

Basisschicht:

Material: 100 Gew.-% eines Polypropylenpolymeren mit einer Dichte von 0,91 g/cm$^3$ und einem Schmelzflußindex von 3,3 g/10 min bei 230°C und einer Belastung von 2,16 N nach DIN 53 735 bestimmt

**Vergleichsbeispiel 1**

Es wurde eine Folie gefertigt wie in Beispiel 1, jedoch wurde zu gleichen Anteilen das Antiblockmittel gemäß Beispiel 1 der Außenschicht b durch ein Siliciumdioxid (SiO$_2$) mit einem mittleren Teilchendurchmesser von 4 $\mu$m ersetzt.

**Vergleichsbeispiel 2**

Es wurde eine Folie gefertigt wie in Beispiel 2, jedoch wurde zu gleichen Anteilen das Antiblockmittel gemäß Beispiel 1 durch ein Siliciumdioxid (SiO$_2$) mit einem mittleren Teilchendurchmesser von 4 $\mu$m eingesetzt.

**Vergleichsbeispiel 2.1**

Es wurde eine Folie gefertigt wie in Beispiel 2, jedoch wurde zu gleichen Anteilen das Antiblockmittel gemäß Beispiel 1 durch ein überwiegend kugelförmiges Antiblockmittel mit einem mittleren Teilchendurch-

EP 0 668 314 A1

messer von 0,5 bis 7 μm, insbesondere 0,7 bis 4 μm, das in EP-A 0 447 652 beschrieben wird, eingesetzt.

**Vergleichsbeispiel 3**

Es wurde eine Folie gefertigt wie in Beispiel 3, jedoch wurde zu gleichen Anteilen das Antiblockmittel gemäß Beispiel 1 durch ein überwiegend kugelförmiges Antiblockmittel mit einem mittleren Teilchendurchmesser von 0,5 bis 7 μm, insbesondere 0,7 bis 4 μm, das in EP-A 0 447 652 beschrieben wird, eingesetzt.

**Vergleichsbeispiel 4**

Es wurde eine Folie gefertigt wie in Beispiel 4, jedoch wurde zu gleichen Anteilen das Antiblockmittel gemäß Bespiel 1 durch ein amorphes Siliciumdioxid mit einem mittleren Teilchendurchmesser von 3 μm ersetzt.

In der Tabelle 1 sind die Eigenschaften der ein- und dreischichtigen biaxial orientierten Folien der Beispiele und Vergleichsbeispiele zusammengefaßt.

Die Überlegenheit der erfindungsgemäß hergestellten Ein- und Mehrschichtfolien entsprechend der Beispiele 1 bis 4 bezüglich der DIN-Reibung Folie/Folie und Folie/Metall, der Trübung, des Grauschleiers, der Kratzempfindlichkeit und des Oberflächenglanzes geht aus der Tabelle 1 hervor. Besonders positiv ist bei der Verwendung des würfelförmigen Antiblockmittel, daß eine geringe Trübung bei gleichzeitig guter bis sehr guter DIN-Reibung (F/M und F/F) der Folien erreicht wird. Darüber hinaus ist der Grauschleier als Maß für die in den Folien befindlichen Störstellen an den Beispielsfolienmustern mit dem würfelförmigen Antiblockmittel wesentlich geringer als an den Vergleichsfolienmustern.

Tabelle 1

|  | Glanz, 20° | Trübung | Grau-schleier | Kratzempfind-lichkeit | DIN-Reibung Folie/Folie | DIN-Reibung Folie/Metall |
|---|---|---|---|---|---|---|
| **Beispiel 1** | 108 | 0,7 | + | O | 0,28 | 0,68 |
| Vergleichs-beispiel 1 | 105 | 1,1 | + | - | 0,38 | verbl. |
| **Beispiel 2** | 152 | 1,1 | + | + | 0,24 | 0,22 |
| Vergleichs-beispiel 2 | 142 | 1,8 | O | - | 0,26 | 0,23 |
| Vergleichs-beispiel 2.1 | 149 | 1,3 | - | O | 0,37 | 0,32 |
| **Beispiel 3** | 142 | 1,7 | + | + | 0,20 | 0,17 |
| Vergleichs-beispiel 3 | 136 | 1,9 | - | O | 0,22 | 0,16 |
| **Beispiel 4** | 115 | 1,5 | + | O | 0,3 | 0,18 |
| Vergleichs-beispiel 4 | 118 | 1,8 | O | - | 0,42 | 0,25 |

EP 0 668 314 A1

**Prüfmethoden**

Glanz,20°

Die Glanzmessung 20° wird in Anlehnung an die DIN 67 530 durchgeführt. Als Glanz wird der regulär reflektierte Lichtanteil, bezogen auf einen unter 20° zum Lot einfallenden Lichtstrahl bezeichnet. Der Glanz wird in Glanzeinheiten GE angegeben, die auf einen Schwarzglasstandard bezogen werden. Der Wert des Oberflächenglanzes sollte möglichst hoch sein.

Trübung

Die Trübung wird hervorgerufen durch Lichtstreuung an auf der Oberfläche und im Innern der Folie verteilten Partikeln wie Gleitmittelteilchen, Antiblockmittel und Verunreinigungen, sowie an Rauhigkeiten der Oberfläche. Die Messung erfolgt nach der Prüfmethode ASTM D 1003 in % Trübung entsprechend % Haze nach ASTM-Prüfnorm D 1003-61m, Procedure A, nach Eichung des Meßgerätes mit Trübungsnormalen zwischen 0,3 und 34 % Trübung (Haze). Angestrebt sind niedrige Trübungswerte.

Grauschleier

Werden Folienmuster in unterschiedlichen Winkeln in einen Lichtkegel einer Lichtquelle (z. B. Glühbirne oder Neonlampe) gehalten, so wird das Licht an den in der Folie befindlichen Störstellen, wie z. B. Aufrisse um die Antiblockmittel, die beim Recken einer Folie entstehen, gebrochen. An Folienmustern mit großen Aufrissen wird das Licht mehr gebrochen als an Folienmustern mit kleineren Aufrissen. Der Betrachter sieht das gebrochene Licht als Grauschleier, was eine deutliche Differenzierung zwischen großen und kleinen Aufrissen der einzelnen Folienmuster aufgrund unterschiedlicher Antiblockmitteltypen erlaubt.

Für die Beurteilung der einzelnen Folienmuster mit den unterschiedlichen Antiblockmitteltypen wurden vier Personen befragt. Alle vier Personen führten die Beurteilung drei mal an jeweils den miteinander zu vergleichenden Folienmuster, siehe Tabelle 1, in vertauschter Reihenfolge nach der nachfolgenden Bewertung durch:

+ : keinen bis sehr geringen Grauschleier
O : geringer Grauschleier
- : sehr deutlicher Grauschleier.

Kratzempfindlichkeit

Die Kratzempfindlichkeit der Folien wurde visuell nach dem Reiben zweier Folien zwischen Daumen und Zeigefinger beurteilt. Diese visuelle Beurteilung wurde an allen aufgeführten Folienmustern von vier Personen unabhängig durchgeführt. Jede Person wiederholte diese Prüfung in vertauschter Reihenfolge der Folienmuster drei mal. Es wurden jeweils die zu vergleichenden Folienmuster, siehe Tabelle 1, miteinander verglichen, um somit die unterschiedlich verwendeten Polymere in den Außenschichten in die Beurteilung der Kratzempfindlichkeit mit zu berücksichtigen. Die Beurteilung wurde wie folgt vorgenommen:

+ : sehr wenig Kratzer
O : wenig Kratzer,
- : sehr viele Kratzer

DIN-Reibung

Zur Beurteilung der Gleitfähigkeit einer Folie wird die Prüfvorschrift DIN 53 375 (Bestimmung des Reibverhaltens) herangezogen. Die Reibungsmessung nach dieser Vorschrift dient zur Bestimmung des Verhaltens von Folien bei Reibung zweier Folien gegeneinander und der Reibung einer Folie gegen Metall. Angegeben wird die Reibzahl gemäß Definition DIN 53 375.

**Patentansprüche**

1. Wenigstens monoaxial gereckte Polypropylenfolie, enthaltend jeweils ein Antiblockmittel, dadurch gekennzeichnet, daß das Antiblockmittel eine quader- und/oder würfelförmige, vorzugsweise eine wurfelförmige Geometrie mit angefasten,d. h. angeschrägten Kanten hat und röntgenamorph ist.

8

2. Folie nach Anspruch 1, dadurch gekennzeichnet, daß das Antiblockmittel mit angefasten Kanten eine mittlere Kantenlänge (Abstand der jeweils parallel zueinander angeordneten Flächen) von 1,0 bis 4,0 μm, bevorzugt 1,5 bis 3,0 μm aufweist.

3. Folie nach Anspruch 1 und/oder 2, dadurch gekennzeichnet, daß das Antiblockmittel aus 18 bis 25% Aluminium, 18 bis 25% Silicium, 6 bis 12% Natrium und dem Rest Sauerstoff besteht.

4. Folie nach einem oder mehreren der Ansprüche 1 bis 3, dadurch gekennzeichnet, daß die Folie mit oder ohne Gleit- und/oder Antistatikmitteln ausgestattet ist.

5. Folie nach einem oder mehreren der Ansprüche 1 bis 4, dadurch gekennzeichnet, daß die Folie transparent ist.

6. Folie nach einem oder mehreren der Ansprüche 1 bis 5, dadurch gekennzeichnet, daß das Antiblockmittel in einer Menge von 500 bis 5000 ppm, vorzugsweise zwischen 1000 und 3500 ppm bezogen auf die jeweilige Schicht enthalten ist.

7. Folie nach einem oder mehreren der Ansprüche 1 bis 6, dadurch gekennzeichnet, daß die Folie bei einem Mehrschichtaufbau das Antiblockmittel in mindesten einer Außenschicht enthält.

8. Folie nach einem oder mehreren der Ansprüche 1 bis 7, dadurch gekennzeichnet, daß die Folie mindestens eine thermokaschier- und/oder frühsiegel- und/oder metallisierbare Außenschicht aufweist.

9. Folie nach einem oder mehreren der Ansprüche 1 bis 8, dadurch gekennzeichnet, daß mindestens eine Seite der Folie einer Corona-, Fluor- oder Plasmabehandlung unterzogen ist.

10. Folie nach einem oder mehreren der Ansprüche 1 bis 9, dadurch gekennzeichnet, daß die Gesamtdicke der Folie zwischen 8 und 50 μm liegt.

11. Folie nach einem oder mehreren der Ansprüche 1 bis 10, dadurch gekennzeichnet, daß die Dicke der Außenschicht/en, gegebenenfalls unabhängig voneinander, zwischen 1,0 bis 18,75% der Foliengesamtdicke liegt/liegen.

SP4-7936          07625          1 μm

| | Europäisches Patentamt | EUROPÄISCHER RECHERCHENBERICHT | Nummer der Anmeldung EP 95 10 1556 |

# EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 227 168 (MIZUSAWA INDUSTRIAL CHEMICALS LTD.)<br>* Seite 9, Absatz 1 *<br>* Seite 10, Zeile 16 - Seite 11, Zeile 33; Ansprüche; Abbildung 1; Beispiel 6; Tabelle 6 *<br><br>----- | 1-11 | C08K7/00<br>C08L23/12<br>B32B27/32 |
| | | | **RECHERCHIERTE SACHGEBIETE (Int.Cl.6)**<br><br>C08K |

Der vorliegende Recherchenbericht wurde für alle Patentansprüche erstellt

| Recherchenort | Abschlußdatum der Recherche | Prüfer |
|---|---|---|
| DEN HAAG | 30.Mai 1995 | Clemente Garcia, R |